# DEMANDE DE BREVET EUROPEEN

(11) **EP 0 925 972 A1**
(43) Date de publication de la demande: **30.06.1999**
(21) Numéro de dépôt: 98420035.2
(22) Date de dépôt: 23.02.1998
(51) Int. Cl.: B60H 1/34

(54) **Structure à ailettes mobiles de réglage de débit et/ou d'orientation de flux pour conduit d'écoulement de fluide**

(30) Priorité: 24.12.1997 FR 9716814
(71) Demandeur: BOURBON AUTOMOBILE, F-39170 Saint Lupicin (FR)
(72) Inventeur: Scherrer, Bernard, 39170 Saint Lupicin (FR)
(74) Mandataire: Maureau, Philippe

(57) **Abrégé**

Cette structure (1) comprend des ailettes (2) portées par un cadre-support (3), qui sont mobiles par rapport à celui-ci.

Selon l'invention, cette structure (1) comprend des ailettes (2) reliées aux montants du cadre-support (3) par des ponts (4) de matière, ces ponts (4) ayant une déformabilité telle qu'ils permettent le pivotement des ailettes (2), l'ensemble de la structure (1) étant réalisé en une seule pièce par moulage d'une matière synthétique.

Notamment utilisable pour constituer une structure à ailettes mobiles pour aérateur d'habitacle de véhicule automobile.

## Description

La présente invention concerne une structure à ailettes mobiles de réglage de débit et/ou d'orientation de flux pour conduit d'écoulement de fluide. L'invention est notamment utilisable pour constituer une structure à ailettes mobiles pour aérateur d'habitacle de véhicule automobile.

Une structure à ailettes mobiles pour aérateur d'habitacle de véhicule automobile comprend classiquement un cadre-support dans lequel les ailettes sont montées pivotantes entre une position de fermeture, interrompant l'écoulement du flux, et une pluralité de positions de plus ou moins grande ouverture, permettant le réglage du débit du flux d'air. Pour leur pivotement, les ailettes présentent des tourillons coaxiaux moulés en une seule pièce avec elles ou rapportés sur elles, tandis que le cadre-support comprend des trous de réception de ces tourillons.

L'assemblage des ailettes au cadre-support est délicat et nécessite un temps relativement important, qui influe notablement sur le prix de revient de la structure.

L'ajustement entre les trous du cadre et les tourillons doit être précis, afin que le pivotement des ailettes se fasse sans frottements excessifs.

Le cadre est réalisé par moulage d'une matière synthétique, et les petites broches mobiles que comprend le moule pour aménager ces trous sont d'une grande fragilité. Leur remplacement implique un arrêt de la production.

De plus, ces broches doivent avoir une parfaite étanchéité par rapport à la paroi de moule qui les comporte, afin d'éviter toute infiltration de matière entre elles et cette paroi, conduisant à des bavures autour des trous du cadre. De telles infiltrations se produisant plus ou moins inévitablement, les cadres doivent être soigneusement examinés, et, le cas échéant, ébavurés, avant mise en place des ailettes.

Par ailleurs, les structures à ailettes existantes conviennent pour des aérateurs de type classique, dans lesquels ces structures sont situées en arrière des bouches d'écoulement de l'air, et sont donc masquées. Elles ne conviennent pas à un nouveau type d'aérateur envisagé récemment, dans lequel la structure à ailettes est intégrée à une paroi (tableau de bord, console, etc) et affleure plus ou moins avec la surface de celle-ci, et constitue directement la buse de diffusion de l'air.

La présente invention vise à remédier à l'ensemble des inconvénients précités des structures à ailettes existantes, et vise à fournir une structure à ailettes pouvant être, dans le cas d'un aérateur pour habitacle de véhicule automobile, intégrée à une paroi, en étant directement visible sur celle-ci.

La structure qu'elle concerne comprend, de manière connue en soi, des ailettes portées par un cadre-support, qui sont mobiles par rapport à celui-ci.

Selon l'invention, la structure comprend des ailettes reliées aux montants du cadre-support par des ponts de matière, ces ponts ayant une déformabilité telle qu'ils permettent le pivotement des ailettes, l'ensemble de la structure étant réalisée en une seule pièce par moulage d'une matière synthétique.

Cette possibilité de moulage en une pièce permet de fabriquer la structure selon l'invention de manière simple et rapide, en remédiant à l'ensemble des inconvénients précités.

En effet, le moulage en une seule pièce élimine tout assemblage ultérieur. De plus, il n'est pas besoin d'aménager des trous dans les bords du cadre-support pour recevoir des tourillons solidaires des extrémités des ailettes, de sorte que l'utilisation des broches mobiles de petites dimensions précitées est éliminée.

Selon une possibilité, chaque ailette est reliée à une barrette perpendiculaire à elle par des ponts de matière, ces ponts ayant une déformabilité telle qu'ils permettent le pivotement des ailettes par rapport à cette barrette, l'ensemble de la structure étant réalisée en une seule pièce par moulage d'une matière synthétique.

Chaque ailette peut ainsi pivoter par rapport à cette barrette, et cette barrette forme une entretoise permettant de conserver un entraxe constant entre les ailettes lors du pivotement de celles-ci.

De préférence, le cadre-support comprend, moulé avec lui, des organes de montage sur l'objet devant être équipé de la structure, notamment le corps ou le barrillet d'un aérateur de véhicule automobile, cet objet comprenant des moyens de montage complémentaires. Ces différents moyens de montage peuvent être du type à enclenchement, de sorte que le montage de la structure sur ledit objet peut être réalisé de manière particulièrement simple et rapide.

Avantageusement, chaque ailette s'étend en longueur au moins jusqu'au-delà des faces internes des montants du cadre-support, et lesdits ponts de matière relient ces montants et les parties de chaque ailette situées en regard de ces montants.

Les ponts de matière sont ainsi orientés perpendiculairement aux axes de pivotement des ailettes. Les pliures qu'ils subissent lors du mouvement de ces dernières n'affectent pas leur résistance, qui peut être estimée à au moins 100 000 cycles d'ouverture-fermeture des ailettes. Cette résistance rend la structure selon l'invention particulièrement adaptée à une utilisation pour un aérateur d'habitacle de véhicule automobile.

En outre, le moulage en une pièce permet de conférer à la structure selon l'invention un aspect visuel attractif, rendant possible l'utilisation de cette structure en tant qu'aérateur intégré à une paroi, étant donné que les ailettes s'étendent sur l'intégralité de la largeur de l'aérateur et masquent les montants du cadre-support.

De préférence, les extrémités de chaque ailette sont recourbées sur un même côté, sensiblement à 90° par rapport au plan de l'ailette, ce qui permet, outre l'amélioration de l'aspect visuel de la structure, de favoriser l'orientation des chaînes moléculaires de la matière synthétique parallèlement à l'axe des ponts de matière.

Cette caractéristique permet d'augmenter encore la résistance des ponts à la fatigue.

Selon une forme de réalisation préférée de l'invention, chaque ailette comprend un redan le long de l'un de ses bords parallèles à l'axe de pivotement de l'ailette, et un rebord faisant saillie dans le plan de l'ailette, le long du bord opposé de celle-ci, le rebord d'une ailette étant destiné à venir en appui contre l'ailette adjacente au niveau dudit redan lorsque les ailettes sont en position de fermeture, et lesdits rebords et redans présentant une épaisseur telle que les faces supérieures des ailettes soient situées sensiblement dans un même plan.

Ces rebords et redans constituent des chicanes augmentant l'étanchéité au fluide des ailettes lorsque celles-ci sont en position fermée. De plus, ils permettent de répartir sur plusieurs ailettes une pression éventuellement exercée sur une ailette, et augmentent ainsi la résistance et l'homogénéité de la structure.

Pour sa bonne compréhension, l'invention est à nouveau décrite ci-dessous en référence au dessin schématique annexé représentant, à titre d'exemple non limitatif, plusieurs formes de réalisation préférées de la structure à ailettes mobiles qu'elle concerne.
La figure 1 en est une vue en perspective, selon une première forme de réalisation ;
la figure 2 en est une vue partielle, selon une variante ;
les figures 3 et 4 en sont des vues en coupe longitudinales, dans deux positions différentes ;
la figure 5 en est une vue en coupe longitudinale, montée dans le corps d'un aérateur de véhicule automobile ;
la figure 6 en est une vue en perspective, selon une deuxième forme de réalisation ;
la figure 7 en est une vue en coupe selon la ligne VII-VII de la figure 6 ;
la figure 8 en est une vue partielle, en perspective ;
la figure 9 en est une vue en coupe selon la ligne IX-IX de la figure 1, à échelle agrandie ;
la figure 10 en est une vue en perspective selon une troisième forme de réalisation ;
la figure 11 en est une vue en perspective selon une variante ;
la figure 12 en est une vue en perspective selon une quatrième forme de réalisation ;
la figure 13 en est une vue en perspective selon une cinquième forme de réalisation, et
la figure 14 en est une vue en perspective selon une sixième forme de réalisation.

Par simplification, les éléments qui se retrouvent dans ces différentes formes de réalisation, ou qui sont similaires d'une forme de réalisation à une autre, sont désignés par les mêmes références numériques.

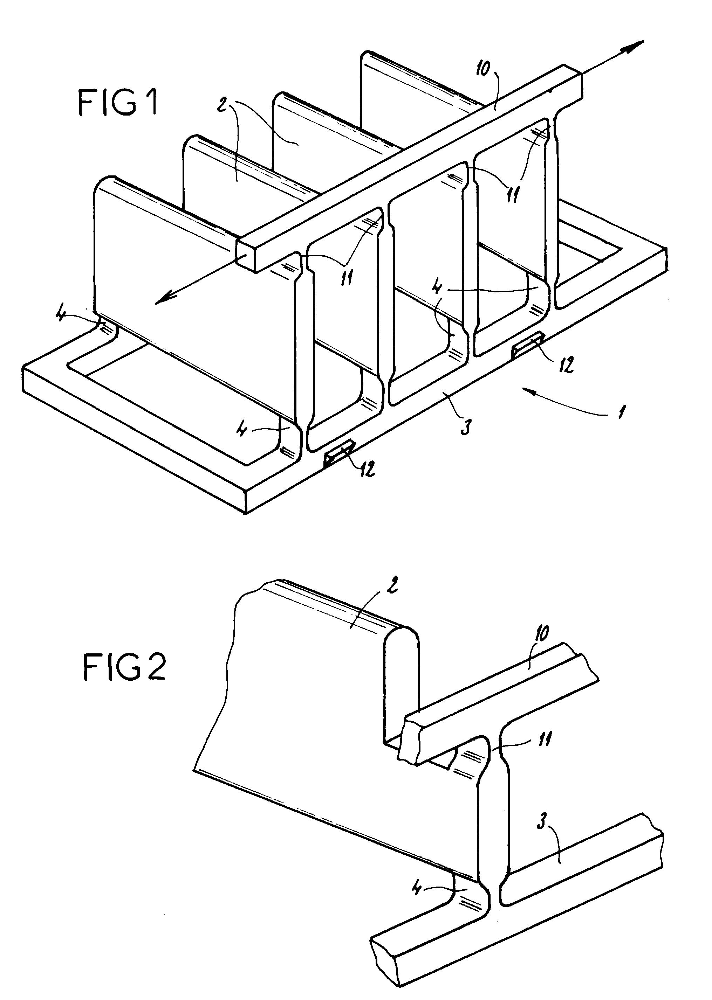

Les figures 1 à 5 représentent, sous différents angles, une structure 1 à ailettes mobiles 2, utilisable pour un aérateur d'habitacle de véhicule automobile.

Cette structure 1 comprend un cadre-support 3, comportant les ailettes 2.

Il apparaît aux figures que les ailettes 2 s'étendent en longueur jusqu'au-delà des faces internes du cadre-support 3, de sorte que les extrémités des ailettes 2 sont situées en regard des deux montants latéraux correspondants de ce cadre-support 3.

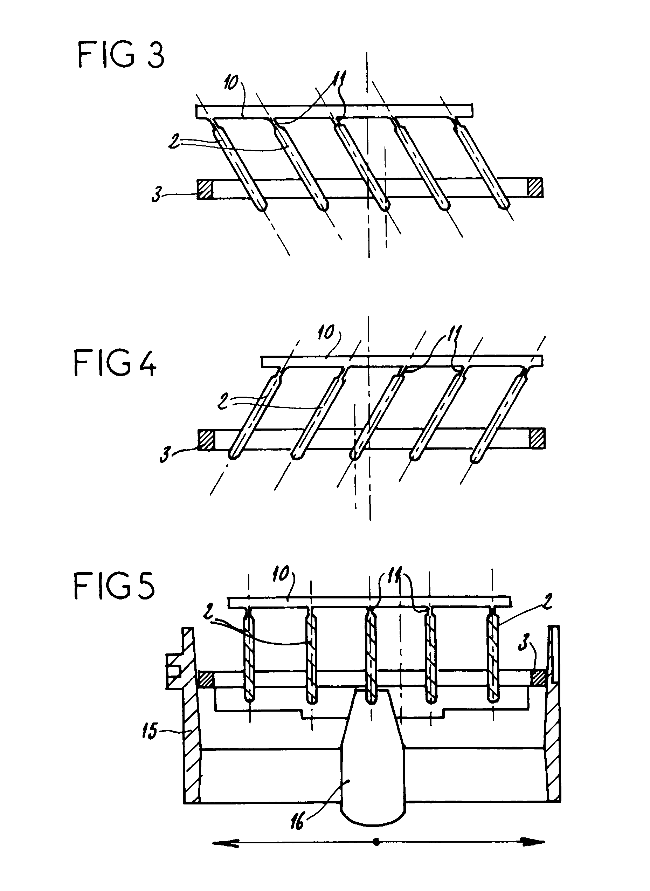

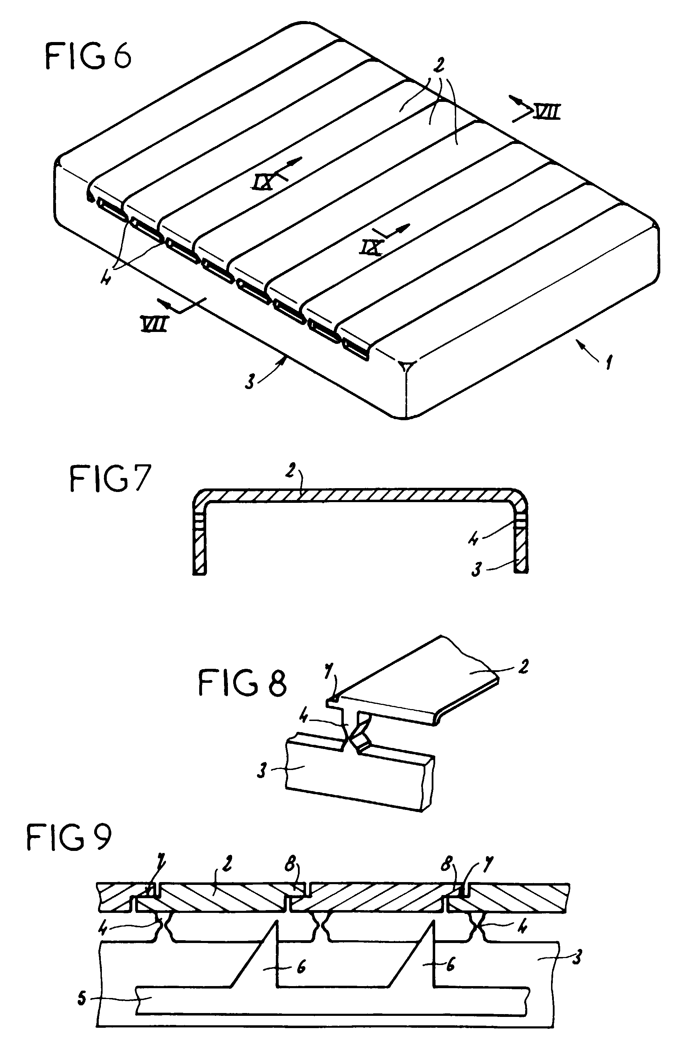

Les ailettes 2 sont reliées aux montants du cadre-support 3 par des ponts de matière 4, ces ponts 4 ayant une déformabilité telle qu'ils permettent le pivotement des ailettes 2, comme montré aux figures 3 et 4.

Chaque ailette 2 est reliée à une barrette 10 perpendiculaire à elle par des ponts de matière 11, ces ponts 11 étant similaires aux ponts 4 et ayant une déformabilité telle qu'ils permettent le pivotement des ailettes 2 par rapport à cette barrette 10.

En outre, le cadre-support 3 comprend des dents 12 de montage de la structure 1 sur le corps 15 d'un aérateur de véhicule automobile, ce corps 15 comprenant des lumières destinées à recevoir ces dents 12 par enclenchement.

L'ensemble de la structure 1 est réalisé en une seule pièce par moulage d'une matière synthétique, en particulier du polypropylène.

Un bouton de manoeuvre 16 fixé sur l'ailette 2 centrale fait saillie au-delà du corps 15 pour permettre l'orientation des ailettes 2. Des frottements sont créés au niveau de ce bouton 16 ou de la barrette 11 pour conserver une position déterminée des ailettes 2, à l'encontre de la force de rappel élastique de la matière constituant la structure 1.

La figure 2 montre que chaque ailette 2 peut comprendre un dégagement pour permettre de placer la barrette 10 en deça des bords des ailettes opposés au cadre 3, et limiter ainsi l'encombrement de la structure 1.

Dans la deuxième forme de réalisation montrée aux figures 6 à 9, les extrémités de chaque ailette 2 sont recourbées sur un même côté, sensiblement à 90° par rapport au plan de l'ailette 2.

Les ponts 4 présentent chacun une zone centrale amincie, formant une charnière-film d'axe parallèle à l'axe longitudinal de chaque ailette, et ont une longueur telle qu'ils peuvent être déformés élastiquement par pliage, pour permettre le pivotement des ailettes 2 entre une position de fermeture et une pluralité de positions de plus ou moins grande ouverture.

Ce pivotement est réalisé au moyen d'une tige 5 comprenant une pluralité de dents 6, chacune de ces dents 6 étant située en face du bord libre d'une ailette 2. Cette tige 5 est mobile en translation perpendiculairement aux ailettes 2, entre une position d'effacement, dans laquelle ces dents 6 sont à distance des ailettes 2, et une pluralité de positions actives, dans lesquelles ces dents 6 soulèvent les ailettes 2 avec un degré plus ou moins important de pivotement. Le déplacement de la tige 5 est réalisé au moyen d'un organe de commande tel qu'une molette ou un bouton, situé à proximité de l'aérateur, et d'une transmission appropriée (non représentés car bien connus en soi).

En outre, ainsi que cela est visible à la figure 4, chaque ailette 2 comprend un redan 7 le long de l'un de ses bords parallèles à l'axe de pivotement de l'ailette 2, et un rebord 8 faisant saillie dans le plan de l'ailette 2, le long du bord opposé de celle-ci. En position de fermeture des ailettes 2, le rebord 8 d'une ailette est destiné à venir en appui contre l'ailette 2 adjacente au niveau dudit redan 7 et les épaisseurs de ces rebords 8 et redans 7 sont telles que les faces supérieures des ailettes 2 sont situées sensiblement dans un même plan dans cette position de fermeture.

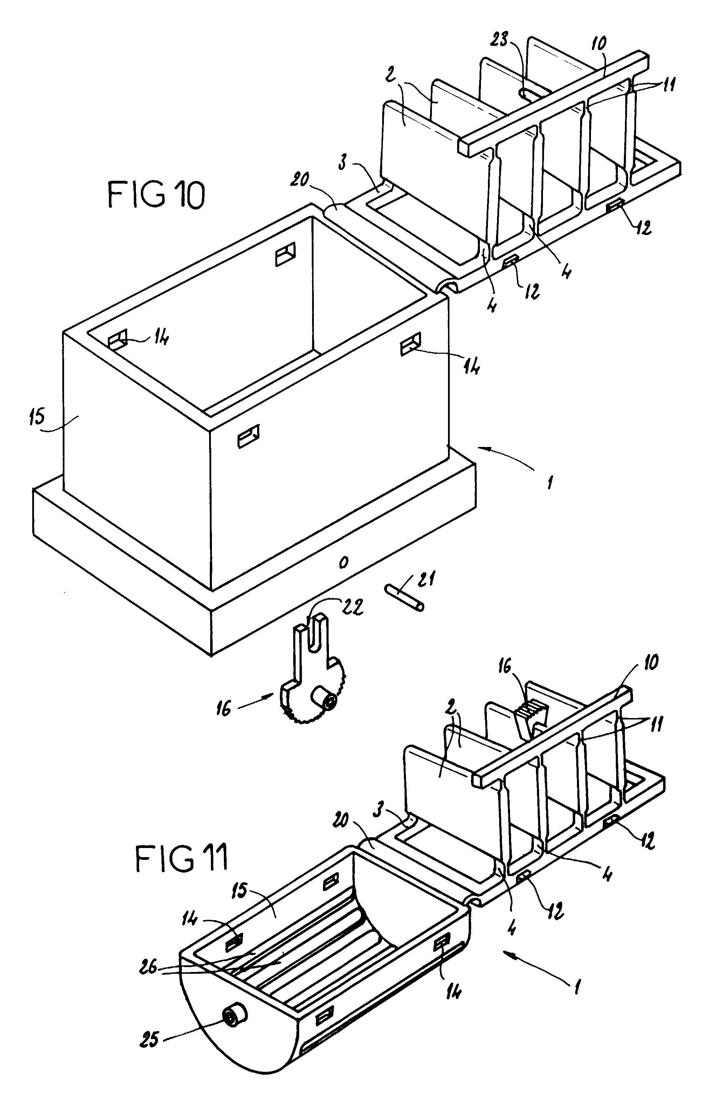

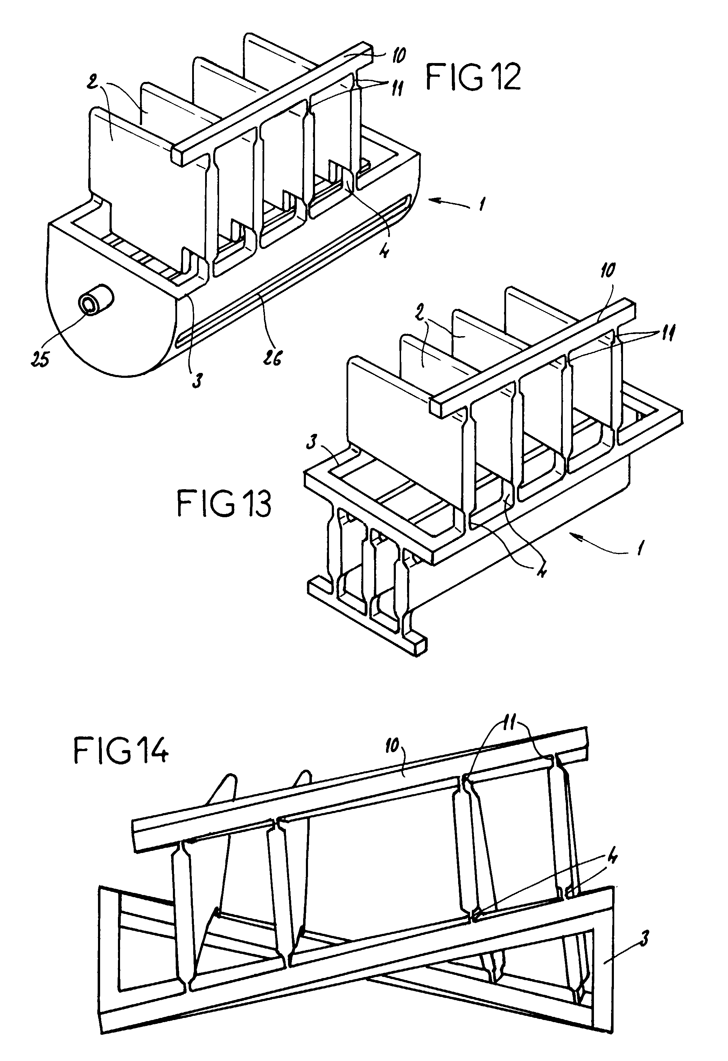

Dans la troisième forme de réalisation de l'invention représentée aux figures 10 et 11, le cadre-support 3 est moulé en une pièce avec la partie 15 de l'aérateur destinée à le recevoir et est relié à cette partie 15 par une charnière-film 20.

Dans le cas de la figure 10, la partie 15 est constituée par un boîtier destiné à former une partie du conduit auquel est relié l'aérateur. Le cadre-support 3 comprend des dents 12 destinées à être encliquetées dans des lumières 14 correspondantes aménagées dans le boîtier 15. Le bouton 16 est monté pivotant, avec frottements, sur le boîtier 15 au moyen d'un axe 21. Il comprend une encoche 22 destinée à recevoir un tourillon 23 solidaire de la barrette 10, pour permettre, lors de son pivotement, la translation de cette dernière.

Dans le cas de la figure 11, la partie 15 est constituée par un barillet d'aérateur, comprenant des tourillons coaxiaux 25 qui permettent son pivotement dans un boîtier et des lamelles 26 délimitant entre elles des lumières d'écoulement de l'air. Le bouton 16 peut être, dans ce cas, venu de moulage avec une ailette 2 et s'engage avec frottement entre deux lamelles 26 lors du positionnement du cadre 3 dans le barillet 15.

Dans la quatrième forme de réalisation montrée à la figure 12, le cadre-support 3 est constitué lui-même par un barillet du type précité.

Dans la cinquième forme de réalisation montrée à la figure 13, le cadre-support 3 est relié à deux séries d'ailettes 2 perpendiculaires d'une série à l'autre. Ces deux séries permettent de régler l'orientation du flux selon deux directions perpendiculaires.

Dans la sixième forme de réalisation montrée à la figure 14, le cadre-support 3 est moulé de manière à présenter une forme neutre gauche. Cette forme permet à la structure de pouvoir être adaptée à des configurations particulières de conduit, tout en conservant un fonctionnement acceptable des ailettes.

L'invention fournit ainsi une structure à ailettes mobiles ayant les nombreux avantages indiqués plus haut, notamment celui de pouvoir être intégrée à une paroi (tableau de bord, console, etc) d'habitacle de véhicule automobile, en affleurant plus ou moins avec la surface de celle-ci, pour constituer directement la bouche de diffusion et d'orientation du flux d'air.

Il va de soi que l'invention n'est pas limitée à la forme de réalisation décrite ci-dessus à titre d'exemple mais qu'elle en embrasse, au contraire, toutes les variantes de réalisation. Ainsi, des revêtements d'étanchéité peuvent être placés dans les zones de contact mutuel des ailettes 2, et des parties moulées avec le cadre-support 3 ou des inserts fixés à ce dernier peuvent être prévus pour boucher les fenêtres délimitées par le bord supérieur du cadre 3, le bord inférieur des ailettes 2 et les ponts 4, ces parties moulées ou inserts présentant des dégagements pour ne pas faire obstacle au pivotement des ailettes 2.

## Revendications

1. Structure (1) de réglage de débit et/ou d'orientation de flux pour conduit d'écoulement de fluide, comprenant des ailettes (2) portées par un cadre-support (3), qui sont mobiles par rapport à celui-ci, caractérisée en ce qu'elle comprend des ailettes (2) reliées aux montants du cadre-support (3) par des ponts (4) de matière, ces ponts (4) ayant une déformabilité telle qu'ils permettent le pivotement des ailettes (2), l'ensemble de la structure (1) étant réalisé en une seule pièce par moulage d'une matière synthétique.

2. Structure selon la revendication 1, caractérisée en ce que chaque ailette (2) est reliée à une barrette (10) perpendiculaire à elle par des ponts de matière (11), ces ponts (11) ayant une déformabilité telle qu'ils permettent le pivotement des ailettes (2) par rapport à cette barrette (10), l'ensemble de la structure (1) étant réalisé en une seule pièce par moulage d'une matière synthétique.

3. Structure selon la revendication 1 ou la revendication 2, caractérisée en ce que le cadre-support (3) comprend, moulé avec lui, des organes (12) de montage sur l'objet (15) devant être équipé de la structure (1), cet objet (15) comprenant des moyens de montage (14) complémentaires.

4. Structure selon l'une des revendications 1 à 3, caractérisée en ce qu'elle comprend des ailettes (2) s'étendant en longueur au moins jusqu'au-delà des faces internes du cadre-support (3), et en ce que les parties de chaque ailette (2) situées en regard des montants correspondants du cadre-support (3) sont reliées à ces montants par les ponts de matière (4).

5. Structure selon la revendication 4, caractérisée en ce que les extrémités de chaque ailette (2) sont recourbées sur un même côté, sensiblement à 90° par rapport au plan de l'ailette (2).

6. Structure selon la revendication 4 ou la revendication 5, caractérisée en ce que chaque ailette (2) comprend un redan (7) le long de l'un de ses bords parallèles à l'axe de pivotement de l'ailette (2), et un rebord (8) faisant saillie dans le plan de l'ailette (2), le long du bord opposé de celle-ci, le rebord (8) d'une ailette (2) étant destiné à venir en appui contre l'ailette (2) adjacente au niveau dudit redan (7) lorsque les ailettes (2) sont en position de fermeture, et lesdits rebords (8) et redans (7) présentant une épaisseur telle que les faces supérieures des ailettes (2) soient situées sensiblement dans un même plan.

7. Structure selon l'une des revendications 4 à 6, caractérisée en ce que des revêtements d'étanchéité sont placés dans les zones de contact mutuel des ailettes (2).

8. Structure selon l'une des revendications 4 à 7, caractérisée en ce que des parties moulées avec le cadre-support 3 ou des inserts fixés à ce dernier sont prévus pour boucher les fenêtres délimitées par le bord supérieur du cadre (3), le bord inférieur des ailettes (2) et les ponts (4), ces parties moulées ou inserts présentant des dégagements pour ne pas faire obstacle au pivotement des ailettes (2).

9. Structure selon l'une des revendications 1 à 8, caractérisée en ce qu'elle est réalisée en polypropylène.

10. Structure selon l'une des revendications 1 à 9, caractérisée en ce que le cadre-support (3) est moulé en une pièce avec la partie (15) de l'aérateur destinée à le recevoir et est relié à cette partie (15) par une charnière-film (20).

11. Structure selon l'une des revendications 1 à 10, caractérisée en ce que le cadre-support (3) est constitué par un barillet d'aérateur, comprenant des tourillons coaxiaux (25) qui permettent son pivotement dans un boîtier et des lamelles (26) délimitant entre elles des lumières d'écoulement de l'air.

12. Structure selon l'une des revendications 1 à 11, caractérisée en ce que le cadre-support (3) est relié à deux séries d'ailettes (2) perpendiculaires d'une série à l'autre.

13. Structure selon l'une des revendications 1 à 12, caractérisée en ce que le cadre-support (3) est moulé de manière à présenter une forme neutre gauche.
